# EUROPEAN PATENT SPECIFICATION

(11) **EP 2 261 101 B1**
(45) Date of publication and mention of the grant of the patent: **07.03.2012**
(21) Application number: 09425229.3
(22) Date of filing: 11.06.2009
(51) Int. Cl.: B62D 7/15, B62D 7/14

(54) **Steering system for automotive vehicles comprising at least two steering axles**
Lenkvorrichtung für Kraftfahrzeuge mit mindestens zwei Lenkachsen
Système de direction pour un véhicule automoteur comportant au moins deux essieux directeurs

(43) Date of publication of application: 15.12.2010
(73) Proprietor: Astra Veicoli Industriali S.p.A., 29100 Piacenza (IT)
(72) Inventor: Battaglia, Diego, 25050 Passirano (IT)
(74) Representative: Borsano, Corrado

(56) References cited:
- EP-A- 0 870 671
- WO-A-2007/128072
- US-A- 3 481 620

## Description

### Application field of the invention

The present invention relates to the field of the steering systems, and in particular to a steering system with additional cylinder on steering idler arm for a vehicle having more steering axles, especially industrial or commercial vehicle.

### Description of the prior art

The steering system of a vehicle may be subject to remarkable stresses, as in the case of industrial or commercial vehicles or in the condition of full load and stationary vehicle.

In these conditions, all the components of the kinematic chain are overloaded, so that the steering manoeuvre may become difficult or impossible, even in presence of the usual hydraulic steering gear, and it may also be possible to damage said components.

More in particular, in case the vehicle is equipped with more than one steering axle, the overload condition particularly affects the linkages connecting the steering axles.

EP0870 671 discloses a steering system according to the preamble of claim 1

### Summary of the invention

Therefore the aim of the present invention is to overcome all the drawbacks mentioned above and to provide a steering system for a vehicle having more than one steering axle which allows the steering even in the heaviest operating conditions, such as those mentioned above, so that it avoids to damage the components of the system.

The subject of the present invention is a steering system for a vehicle having more steering axles equipped with one or more hydraulic cylinders which act on the leverages of the steering system in order to increase the steering force and to avoid overloading a tie rod which connects the leverages of the steering axles.

The subject of the present invention is in particular a steering system for a vehicle with more than one steering axles as described more fully in the claims which are an integral part of the present description.

### Brief description of the Figures

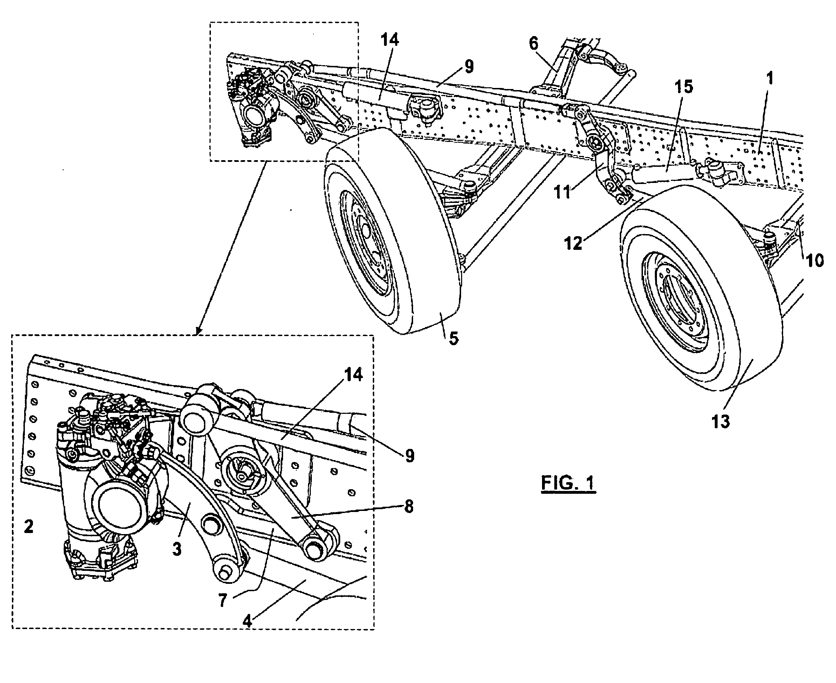

The purposes and advantages of this invention will become clear from the detailed description that follows of an example of embodiment thereof (and of its variants) and from the drawings provided for example purposes only and not to be considered restrictive, wherein figure 1 shows a part of a vehicle comprising at least a significant part of the component of the steering system which is subject of the present invention, and a magnification of a particular area of this system.

### Detailed description of preferred embodiments of the invention

In fig. 1, number 1 indicates a side member of the frame of the industrial vehicle. The figure also shows: an hydraulic steering gear 2 fixed to the side member, which controls a first lever arm 3, activated by the hydraulic steering gear 2, suitable for rotating vertical wise. A first tie rod 4 is pivoted to the arm 3 and controls the steering of the wheel 5 of a first steering axles 6.

The arm 3 also controls a leverage comprising a connecting rod 7 rotationally connected to one end of the arm 3, while the other end is connected to an arm of a first steering idler arm 8 having a central fulcrum which laterally pivots on the side member 1, near the first steering axle.

An end of the second tie rod 9 is connected to the opposite second arm of the steering idler arm 8 and is suitable to connect the movements of the steering system of a second steering axle 10 of the vehicle to those of the first axle 6. The other end of the second tie rod 9 is connected to a first arm of a second steering idler arm 11 having a central fulcrum which laterally pivots on the side member 1, near the second steering axle. The second arm of the steering idler arm 11 controls a third tie rod 12 which controls the steering of the wheel 13 of the second steering axle 10.

According to an aspect of the present invention, an hydraulic cylinder 14 is present and one of its ends is fixed to one end of the external part of the side member 1, while the other end is fixed to the second arm of the steering idler arm 8. The cylinder 14 reacts to the side member and, when operating, contributes to the movement of the steering idler arm 8 around its pivot. The cylinder 14 is operated in synchrony with the activation of the hydraulic steering gear 2, by acting directly on the steering idler arm 8, and increasing the overall force of the steering system.

Moreover, the direct action on the first steering idler arm 8 avoids to overload the tie rod 9, which is a critical component for the steering system, since its length increases its possibilities to be deformed, broken or bent when the highest force is exerted, such as in full load conditions or with stationary vehicle. Tensile and thrust stresses exerted by the tie rod 9 in order to transfer the steering movements from the first to the second axle are reduced.

A second hydraulic cylinder 15 is also present and one of its ends is fixed to one end of the external part of the side member 1, while the other end is fixed to the second arm of the second steering idler arm 11. The function of the second cylinder is the same but it is opposite to that of the first cylinder. When the first cylinder pushes, the second pulls and vice versa. This optional second cylinder, apart for contributing to a further increase of the overall force of the steering system, further decreases the overload of the tie rod 9, in a balanced way both in the traction and in the thrust phase of the tie rod itself.

It is therefore possible to obtain the steering of the wheels in any condition, even the most demanding, which may occur in full load conditions or with a stationary vehicle, or also when the wheel has to steer when it is next to a step on the side of the road, since it can get over the step.

The hydraulic cylinders 14, 15 may be activated continuously and synchronously with the activation of the hydraulic steering gear 2, or they may be activated only in the highest stress conditions of the steering system.

It will be apparent to the person skilled in the art that other alternative and equivalent embodiments of the invention can be conceived and reduced to practice without departing from the scope of the invention.

For example it is possible to differently position the various components of the steering system and to use a different number of components, for example more cylinders.

From the description set forth above it will be possible for the person skilled in the art to embody the invention with no need of describing further construction details.

## Claims

1. Steering system for vehicle with more steering axles comprising
- an hydraulic steering gear (2), to be fixed to a side member (1) of the vehicle frame, which controls, through a first arm (3) rotating vertical wise a first leverage (4, 8) which controls the steering of a first axle (6) of the vehicle,
- at least a second leverage (11, 12) which controls the steering of at least a second axle (10) and
- at least a first tie rod (9) connecting said at least first (4, 8) and second leverage (11, 12
- a first hydraulic cylinder (14), to be fixed to one end of the external part of the side member 1, able to act on said first leverage (3, 4, 8) in order to increase the steering force of the system,
**characterized in that** the steering system further comprises
- a first steering idler arm (8) to be mounted on said side member (1) and having a central fulcrum which laterally pivots on the side member (1), having a first arm connecting to said first arm (3) through a connecting rod (7) and having a second arm connected with both
- one end of said first tie rod (9) and
- said first hydraulic cylinder (14).

2. Steering system for vehicle with more steering axles as in claim 1, comprising at least a second hydraulic cylinder (15) suitable for acting on said second leverage (11, 12) in an opposite way with respect to said first leverage in order to increase the steering force of the system.

3. Steering system for vehicle with more steering axles as in claim 2, wherein said second leverage (11, 12) controlling the steering of said at least second axle (10) comprises a second steering idler arm (11) having a central fulcrum which laterally pivots on the side member (1) having a first arm connected with both
- a second tie rod (12) controlling the steering of the at least second steering axle (10)
- said at least a second hydraulic cylinder (15),
and a second arm connected with another end of said first tie rod (9).

4. Method of controlling a steering system for vehicle with more steering axles according to one of the preceding claims, wherein the hydraulic cylinders (14, 15) are activated continuously and synchronously with the activation of the hydraulic steering gear (2), or only in the highest stress conditions of the steering system.

## Patentansprüche

1. Lenksystem für ein Fahrzeug mit mehreren Lenkachsen, umfassend
- ein hydraulisches Lenkgetriebe (2) zur Befestigung an einem Seitenelement (1) des Fahrzeugrahmens, das durch einen ersten Arm (3), der vertikal rotiert, einen ersten Hebel (4, 8) steuert, der das Lenken der ersten Achse (6) des Fahrzeugs steuert,
- zumindest einen zweiten Hebel (11, 12), der das Lenken zumindest einer zweiten Achse (10) steuert, und
- zumindest einen ersten Zugstab (9), der den zumindest einen ersten (4, 8) und zweiten Hebel (11, 12) verbindet,
- einen ersten Hydraulikzylinder (14) zur Befestigung an einem Ende des äußeren Teils des Seitenelements (1), der in der Lage ist, auf den ersten Hebel (3, 4, 8) zu wirken, um die Lenkkraft des Systems zu erhöhen,
**dadurch gekennzeichnet, dass** das Lenksystem ferner umfasst
- einen ersten Lenkzwischenarm (8) zur Anbringung an dem Seitenelement (1), der eine zentrale Abstützung aufweist, die sich lateral an dem Seitenelement (1) dreht, und einen ersten Arm aufweist, der mit dem ersten Arm (3) durch einen Verbindungsstab (7) verbunden ist, und einen zweiten Arm aufweist, der mit
- einem Ende des ersten Zugstabs (9) sowie mit
- dem ersten Hydraulikzylinder (14) verbunden ist.

2. Lenksystem für ein Fahrzeug mit mehreren Lenkachsen nach Anspruch 1,
das zumindest einen zweiten Hydraulikzylinder (15) umfasst, der geeignet ist, auf den zweiten Hebel (11, 12) auf eine entgegengerichtete Weise mit Bezug auf den ersten Hebel zu wirken, um die Lenkkraft des Systems zu erhöhen.

3. Lenksystem für ein Fahrzeug mit mehreren Lenkachsen nach Anspruch 2,
wobei der zweite Hebel (11, 12), der das Lenken der zumindest einen zweiten Achse (10) steuert, einen zweiten Lenkzwischenarm (11) umfasst, der eine zentrale Abstützung aufweist, die sich lateral an dem Seitenelement (1) dreht, und einen ersten Arm aufweist, der mit
- einem zweien Zugstab (12), der das Lenken der zumindest einen zweiten Lenkachse (10) steuert, sowie mit
- dem zumindest einen zweiten Hydraulikzylinder (15) verbunden ist, und
einen zweiten Arm aufweist, der mit einem anderen Ende des ersten Zugstabs (9) verbunden ist.

4. Verfahren zum Steuern eines Lenksystems für ein Fahrzeug mit mehreren Lenkachsen nach einem der vorhergehenden Ansprüche, wobei die Hydraulikzylinder (14, 15) ständig und synchron mit der Aktivierung des hydraulischen Lenkgetriebes (2) oder nur unter den höchsten Beanspruchungsbedingungen des Lenksystems aktiviert werden.

## Revendications

1. Système de direction pour véhicule avec plusieurs essieux de direction comprenant
- un boîtier de direction hydraulique (2), à fixer à un organe latéral (1) du cadre de véhicule, qui commande, par l'intermédiaire d'un premier bras (3) en rotation verticale un premier bras de levier (4, 8) qui commande la direction d'un premier essieu (6) du véhicule,
- au moins un second bras de levier (11, 12) qui commande la direction d'au moins un second essieu (10) et
- au moins une première biellette de direction (9) raccordant ledit au moins un premier (4, 8) et second (11, 12) bras de levier
- un premier cylindre hydraulique (14), à fixer à une extrémité de la partie externe de l'organe latéral (1), capable d'agir sur ledit premier bras de levier (3, 4, 8) de façon à augmenter la force de direction du système,
**caractérisé en ce que** le système de direction comprend en outre
- un premier bras de renvoi de direction (8) à monter sur ledit organe latéral (1) et comportant un point d'appui central qui pivote de façon latérale sur l'organe latéral (1), comportant un premier bras raccordé audit premier bras (3) par l'intermédiaire d'une bielle (7) et comportant un second bras raccordé avec à la fois
- une extrémité de ladite biellette de direction (9) et
- ledit premier cylindre hydraulique (14).

2. Système de direction pour véhicule avec plusieurs essieux de direction selon la revendication 1, comprenant au moins un second cylindre hydraulique (15) adapté pour agir sur ledit second bras de levier (11, 12) de façon opposée par rapport audit premier bras de levier de façon à augmenter la force de direction du système.

3. Système de direction pour véhicule avec plusieurs essieux de direction selon la revendication 2, dans lequel ledit second bras de levier (11, 12) commandant la direction dudit au moins un second essieu (10) comprend un second bras de renvoi de direction (11) comportant un point d'appui central qui pivote de façon latérale sur l'organe latéral (1) ayant un premier bras raccordé avec à la fois
- une seconde biellette de direction (12) commandant la direction dudit au moins second essieu de direction (10)
- ledit au moins un second cylindre hydraulique (15), et un second bras raccordé à une autre extrémité de ladite première biellette de direction (9).

4. Procédé de commande d'un système de direction pour véhicule avec plusieurs essieux de direction selon l'une quelconque des revendications précédentes, dans lequel les cylindres hydrauliques (14, 15) sont activés de façon continue et synchrone avec l'activation du boîtier de direction hydraulique (2), ou seulement dans les conditions de contrainte les plus élevées du système de direction.
